# EUROPEAN PATENT APPLICATION

(11) **EP 4 542 252 A1**
(43) Date of publication of application: **23.04.2025**
(21) Application number: 24185883.6
(22) Date of filing: 02.07.2024
(51) Int. Cl.: G01S 7/481, G01S 7/497

(54) **DEVICE AND METHOD FOR DETECTING WINDOW CONTAMINATION OF LIDAR SENSOR**

(30) Priority: 16.10.2023 KR 20230137506
(71) Applicant: Hyundai Mobis Co., Ltd., Gangnam-gu Seoul 06141 (KR)
(72) Inventor: JO, Sung Eun, Seongnam-si 13481 (KR); RA, Hyun Woon, Yongin-si 16875 (KR)
(74) Representative: Vossius & Partner Patentanwälte Rechtsanwälte mbB

(57) **Abstract**

A device for detecting window contamination of a light detection and ranging (LiDAR) sensor, and a method therefor are provided. The device includes: a laser signal transmitter including a transmitter light source, a transmitter optical system, and a transmitter window for transmitting a laser signal from the transmitter light source to the transmitter window through the transmitter optical system; a laser signal receiver including a receiver window disposed on a same plane as the transmitter window, a receiver optical system, and a receiver detector for receiving a reflection signal of the laser signal that is reflected from an object disposed in front of the LiDAR sensor, through the receiver window and the receiver optical system; and a shield for shielding a space between the laser signal transmitter and the laser signal receiver.

## Description

### CROSS-REFERENCE TO RELATED APPLICATION(S)

This application claims priority under 35 U.S.C. §119 to Korean Patent Application No. 1 0-2023-0137506, filed on October 16,2023, in the Korean Intellectual Property Office.

### BACKGROUND

### 1. Field

The following disclosure relates to a device and a method for detecting window contamination of a light detection and ranging (LiDAR) sensor, and more particularly, to a device and a method for detecting contamination occurring on a window of the sensor by using a light signal.

### 2. Description of the Related Art

In general, a light detection and ranging (LiDAR) sensor is a device which may accurately depict its surroundings by firing a laser pulse and receiving light reflected from a surrounding target object and returning thereto to thus measure a distance, a direction, a material, a feature, or the like to the object.

The LiDAR sensor may include a laser transmitter and a laser receiver, and may employ a separate cover protecting the sensor from an external pollutant. The LiDAR sensor may detect the distance by transmitting and receiving laser light, and thus include a window which is disposed on a front cover and through which the laser light is transmitted.

A pollutant such as dirt and dust may adhere to the window, through which the laser light is transmitted, during an operation of the LiDAR sensor. In this case, due to a shielding effect by the pollutant, the LiDAR sensor may have lower efficiency of transmitting and receiving the laser light, and have difficulty in performing accurate detection. Therefore, it is essential to prevent and remove the window contamination to maintain performance of the LiDAR sensor.

There is a need to detect the contamination occurring on the window to prevent the window contamination of the LiDAR sensor and remove the adhered pollutant. The laser light for detecting the surroundings of the LiDAR sensor may be transmitted and received by being transmitted through the window. Accordingly, there is a need to develop a method for detecting the contamination that may monitor and detect the contamination occurring on the window without affecting the transmission and reception of the laser light for detecting the surroundings.

In order to detect the window contamination of the LiDAR sensor, in the prior art, the laser pulse transmitted from the transmitter may be reflected from a window surface of the receiver, and a receiver detector may measure an intensity of a generated signal. The signals reflected from the window surface of the receiver may have different intensities when no contamination occurs and when the contamination occurs, and the prior detector may detect the contamination based thereon.

However, noise may occur in the LiDAR sensor due to internal scattering of the light. Accordingly, a method of completely optically shielding the transmitter and the receiver has been devised to remove the internal noise.

However, for a bistatic LiDAR sensor configured to separate the transmission path and reception path of the laser light, it is impossible to detect the contamination by using the prior method when the transmitter and the receiver are completely optically shielded to remove the internal noise.

Accordingly, a new method for detecting the contamination that may check the window contamination, which is advanced over the prior art, is required for the bistatic LiDAR sensor configured to separate the transmission path and reception path of the laser light when the transmitter and the receiver are completely optically shielded to remove the internal noise.

### SUMMARY

An embodiment of the present invention is directed to providing a device and a method for detecting window contamination of a light detection and ranging (LiDAR) sensor when the transmitter and receiver of the sensor are completely optically shielded to remove internal noise.

An embodiment of the present invention is also directed to providing a device and a method for detecting window contamination of a bistatic LiDAR sensor configured to separate the transmission path and reception path of laser light.

A technical task of the inventive concept is not limited to the task mentioned above, and other tasks not mentioned here may be obviously understood by those skilled in the art from the following description.

In a general aspect of the disclosure, a device for detecting window contamination of a light detection and ranging (LiDAR) sensor, includes: a laser signal transmitter including a transmitter light source, a transmitter optical system, and a transmitter window for transmitting a laser signal from the transmitter light source to the transmitter window through the transmitter optical system; a laser signal receiver including a receiver window disposed on a same plane as the transmitter window, a receiver optical system, and a receiver detector for receiving a reflection signal of the laser signal that is reflected from an object disposed in front of the LiDAR sensor, through the receiver window and the receiver optical system; and a shield for shielding a space between the laser signal transmitter and the laser signal receiver.

The laser signal transmitter may further include a transmitter detector for detecting an internal reflection signal of the laser signal that is reflected through the transmitter window.

The transmitter detector may be parallel to the transmitter light source.

The laser signal receiver may further include a receiver light source for emitting light to the receiver window.

The receiver light source may be parallel to the receiver detector.

The receiver light source may include a light emitting diode (LED).

The receiver light source may include a type different from that of the transmitter light source.

The LiDAR sensor may include a bistatic LiDAR sensor.

In another general aspect of the disclosure, a method for detecting window contamination of a light detection and ranging (LiDAR) sensor by using the device for detecting window contamination of a LiDAR sensor, includes: transmitting, by a laser signal transmitter, a laser signal from a transmitter light source to a transmitter window through a transmitter optical system; receiving, by a laser signal receiver, a reflection signal of the laser signal that is reflected from an object, disposed in front of the LiDAR sensor, by a detector through a receiver window and a receiver optical system; shielding, by a shield, a space between the laser signal transmitter and the laser signal receiver; detecting, by a transmitter detector of the laser signal transmitter, an internal reflection signal of the laser signal that is reflected through the transmitter window; emitting light, by a receiver light source of the laser signal receiver, to the receiver window; interpreting the reflection signal detected by the receiver detector in a standard mode, and interpreting at least one of an internal reflection signal of the laser signal transmitter that is detected by the transmitter detector and an internal reflection signal of the laser signal receiver that is detected by the receiver detector, in a detection mode.

In the detection mode, the method may further include: transmitting the laser signal having a same amplitude and wavelength to at least one contamination detection region predetermined on the transmitter window; receiving the internal reflection signal of the laser signal transmitter that is reflected from the contamination detection region by the transmitter detector; and determining occurrence of the window contamination based on the internal reflection signal of the laser signal transmitter.

In the detection mode, the method may further include: transmitting light having the same amplitude and wavelength to at least one contamination detection region predetermined on the receiver window; receiving the internal reflection signal of the laser signal receiver that is reflected from the contamination detection region by the receiver detector; and determining an occurrence of the window contamination based on the internal reflection signal of the laser signal receiver.

The laser signal may include an intensity that is greater in the standard mode than in the detection mode.

The method of claim 10, wherein the determining of whether the window contamination occurs includes: comparing a measured amplitude of the reflection signal with a reference amplitude of the reflection signal in response to the determination that there is no window contamination; and determining an existence of contamination in the contamination detection region when the measured amplitude of the reflection signal is greater than the reference amplitude.

The receiver light source may include a light emitting diode (LED).

The LiDAR sensor may include a bistatic LiDAR sensor.

In yet another general aspect of the disclosure, a device for detecting window contamination of a light detection and ranging (LiDAR) sensor, includes: a laser signal transmitter including a first light source, a first optical system, and a first window; a laser signal receiver including a second window disposed on a same plane as the transmitter window, a second optical system, and a first detector; a shield for shielding a space between the laser signal transmitter and the laser signal receiver; and a controller configured to: control the laser signal transmitter to transmit a laser signal from the first light source to the first window through the first optical system; and control the laser signal receiver to receive a reflection signal of the laser signal that is reflected from an object disposed in front of the LiDAR sensor, by the first detector through the second window and the second optical system.

The laser signal transmitter further includes a second detector, the laser signal receiver further may include a second light source, and the controller may be further configured to: control the second detector to detect an internal reflection signal of the laser signal that is reflected through the first window; and control the second light source to emit light to the second window.

The controller may be further configured to determine an occurrence of window contamination based on: the reflection signal detected by the first detector, in a standard mode; and at least one of an internal reflection signal of the laser signal transmitter that is detected by the second detector and an internal reflection signal of the laser signal receiver that is detected by the first detector, in a detection mode.

In the detection mode, the controller may be further configured to: control the laser signal transmitter to transmit the laser signal having a same amplitude and wavelength to at least one contamination detection region predetermined on the first window; control the second detector to receive the internal reflection signal of the laser signal transmitter that is reflected from the contamination detection region; and determine the occurrence of the window contamination based on the internal reflection signal of the laser signal transmitter.

The laser signal may include an intensity that is greater in the standard mode than in the detection mode.

Other features and aspects will be apparent from the following detailed description, the drawings, and the claims.

### BRIEF DESCRIPTION OF THE DRAWINGS

FIG. 1 shows a block diagram of a device for detecting window contamination of a light detection and ranging (LiDAR) sensor according to an embodiment of the present invention.
FIG. 2 schematically shows the device for detecting window contamination of a LiDAR sensor according to an embodiment of the present invention.
FIG. 3 shows the device for detecting window contamination in a standard mode according to an embodiment of the present invention.
FIG. 4 shows the device for detecting window contamination in a detection mode according to an embodiment of the present invention.
FIG. 5 shows a flowchart of a method for detecting window contamination of a light detection and ranging (LiDAR) sensor in a detection mode according to an embodiment of the present invention.
FIG. 6 shows a process of determining the contamination according to an embodiment of the present invention.

### DETAILED DESCRIPTION

The above-mentioned purposes, features, and advantages will become more obvious from the following embodiments provided with reference to the accompanying drawings. The following descriptions of specific structures and functions are provided only to describe the embodiments based on a concept of the present invention. Therefore, the embodiments of the present invention may be implemented in various forms, and the present invention is not limited thereto. The embodiments of the present invention may be variously modified and may have several forms, and specific embodiments are thus shown in the accompanying drawings and described in detail in the specification or the application. However, it is to be understood that the present invention is not limited to the specific embodiments, and includes all modifications, equivalents, and substitutions, included in the spirit and scope of the present invention. Terms such as "first", "second", or the like may be used to describe various components, and the components are not to be construed as being limited to the terms. The terms are used only to distinguish one component from another component. For example, a "first" component may be named a "second" component and the "second" component may also be named the "first" component, without departing from the scope of the present invention. It is to be understood that when one component is referred to as being "connected to" or "coupled to" another component, the corresponding component may be connected or coupled directly to another component or connected or coupled to another component with a third component interposed therebetween. On the other hand, it is to be understood that when one component is referred to as being "connected directly to" or "coupled directly to" another component, one component may be connected to or coupled to another component without the third component interposed therebetween. Other expressions to describe a relationship between the components, i.e., "-between" and "directly between" or "adjacent to" and "directly adjacent to", should be interpreted in the same manner as above. Terms used in the specification are used only to describe the specific embodiments rather than limit the present invention. A term of a single number may include its plural number unless explicitly indicated otherwise in the context. It is to be understood that a term "include", "have", or the like used in the specification specifies the existence of features, numerals, steps, operations, components, parts or combinations thereof, and does not preclude the existence or addition of one or more other features, numerals, steps, operations, components, parts or combinations thereof. Unless otherwise defined, all terms including technical and scientific terms used herein have the same meanings as those commonly understood by those skilled in the art to which the present invention pertains. It is to be further understood that terms such as those defined in commonly used dictionaries should be interpreted as having meanings consistent with their meanings in the context of the relevant art and are not to be interpreted in an idealized or overly formal detection unless expressly so defined herein. Hereinafter, the embodiments of the present invention are described in detail with reference to the accompanying drawings. Like reference numerals denote like components throughout the drawings.

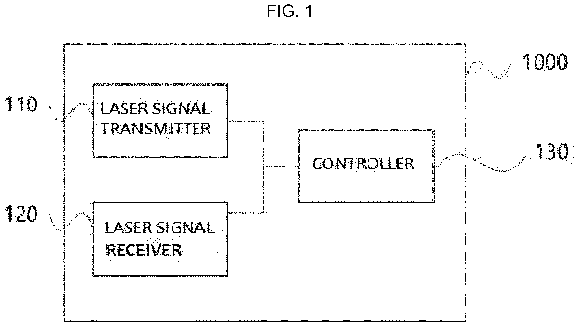

FIG. 1 shows a block diagram of a device 1000 for detecting window contamination of a light detection and ranging (LiDAR) sensor 100 according to an embodiment of the present invention. In an example, the LiDAR sensor 100 of the present invention may be the bistatic LiDAR sensor 100.

In an example, the device 1000 for detecting window contamination of a LiDAR sensor 100 may include a laser signal transmitter 110, a laser signal receiver 120, a shield 140, and a controller 130.

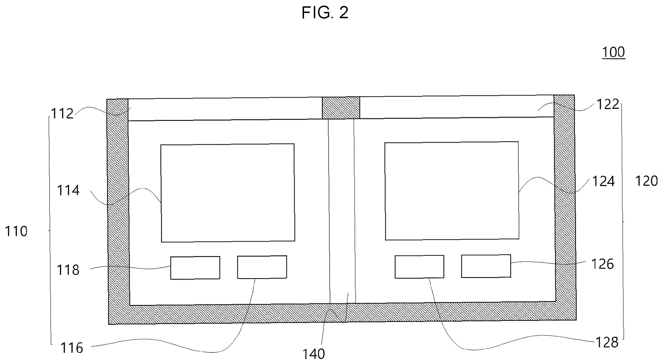

FIG. 2 schematically shows the device 1000 for detecting window contamination of a LiDAR sensor 100 according to an embodiment of the present invention.

In an example, the laser signal transmitter 110 may include a transmitter light source 116, a transmitter optical system 114, a transmitter detector 118, and a transmitter window 112.

The transmitter light source 116, the transmitter optical system 114, and the transmitter window 112 may be sequentially disposed. Light emitted from the transmitter light source 116 may be transferred to the transmitter window 112 through the transmitter optical system 114. In an example, the transmitter light source 116 may emit laser light to the front. In an example, the brightness or intensity of the transmitter light source 116 may be adjustable. The transmitter optical system 114 may be configured as a lens or the like emitting the laser light to the front of the LiDAR sensor 100. The laser light transferred to the transmitter window 112 may be reflected from an object disposed in front of the LiDAR sensor 100, and transferred to the laser signal receiver 120 described below. The transmitter detector 118 may receive the light reflected from the transmitter window 112 and returning into the laser signal transmitter 110. In an example, the transmitter detector 118 may be disposed to be parallel to the transmitter light source 116. A location of the transmitter detector 118 is not limited thereto, and may be disposed in any location enabling the transmitter detector 118 to receive the light reflected from the transmitter window 112 and returning into the laser signal transmitter 110.

In an example, the laser signal receiver 120 may include a receiver detector 128, a receiver optical system 124, a receiver window 122, and a receiver light source 126. The receiver detector 128, the receiver optical system 124 and the receiver window 122 may be sequentially disposed. The light transferred to the receiver window 122 may be transferred to the receiver detector 128 through the receiver optical system 124.

In an example, the receiver light source 126 may emit the light to the receiver window 122. The light emitted from the receiver light source 126 may be transferred to the receiver window 122 through the receiver optical system 124. In an example, the receiver light source 126 may emit the light to the front. In an example, the receiver light source 126 may be light emitting diode (LED) lighting. In an example, the brightness or intensity of the receiver light source 126 may be adjustable. The receiver optical system 124 may be configured as a lens, or the like.

The receiver detector 128 may detect the light emitted from the transmitter light source 116 and the receiver light source 126. In an example, the receiver light source 126 and the receiver detector 128 may be disposed to be parallel to each other, and locations of the receiver detector 128 and the receiver light source 126 are not limited thereto. The receiver detector 128 may be disposed in any location enabling the receiver detector 128 to receive the light emitted from the receiver light source 126, reflected from the receiver window 122, and then returning into the laser signal receiver 120, or the receiver detector 128 to receive the light emitted from the transmitter light source 116, then reflected from the object through the receiver window 122 and returning into the laser signal receiver 120.

The LiDAR sensor 100 may scan a detection range at a predetermined cycle to acquire frame information of its surrounding environment at each cycle. Here, the frame information may include the distance and location information of the surrounding environment for each time cycle.

The LiDAR sensor 100 may emit the laser light to a plurality of target points within the detection range through the laser signal transmitter 110. For example, the LiDAR sensor 100 may emit the laser light emitted from the transmitter light source 116 to the object through the transmitter optical system 114 and the transmitter window 112. The emitted laser light may pass through the transmitter window 112 of the LiDAR sensor 100 to reach the object, which is the target point, and then be reflected from the object to return to the laser signal receiver 120 through the receiver window 122.

The LiDAR sensor 100 may acquire at least one of the distance information and location information of the target point based on a time of flight (TOF) from a time point at which the laser light is transmitted through the laser signal transmitter 110 to a time point at which the reflected light is received by the laser signal receiver 120.

The LiDAR sensor 100 of the present invention may include the transmitter window 112 and the receiver window 122, configured as separate components, thus easily optically shielding a space between the transmitter window 112 and the receiver window 122. For example, in the present invention, the transmitter window 112 and the receiver window 122 may be the separate components, and the shield 140 may be disposed between the transmitter and the receiver.

In an example, the shield 140 may shield the space between the laser signal transmitter 110 and the laser signal receiver 120. The laser signal transmitter 110 and the laser signal receiver 120 may be completely optically blocked by the shield 140, thus preventing noise from occurring by light scattering of the components in the LiDAR sensor 100.

The controller 130 may control the laser signal transmitter 110 and the laser signal receiver 120 to thus perform a method for detecting window contamination to be described below. In an example, the controller 130 may control the device 1000 for detecting window contamination for the device 1000 for detecting window contamination to be operated in two modes. In an example, the two modes may include a standard mode and a detection mode. The standard mode may indicate a normal state, and the detection mode may indicate a mode for detecting the contamination occurring on the transmitter window 112 or the receiver window 122.

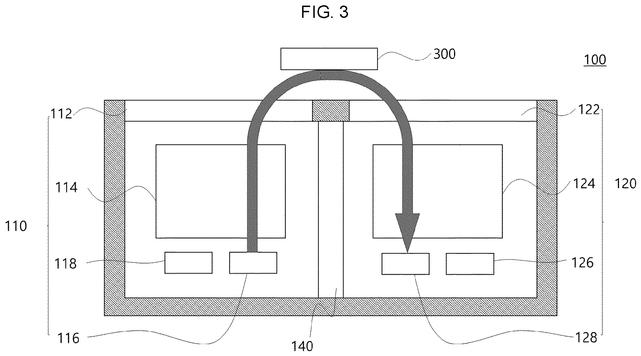

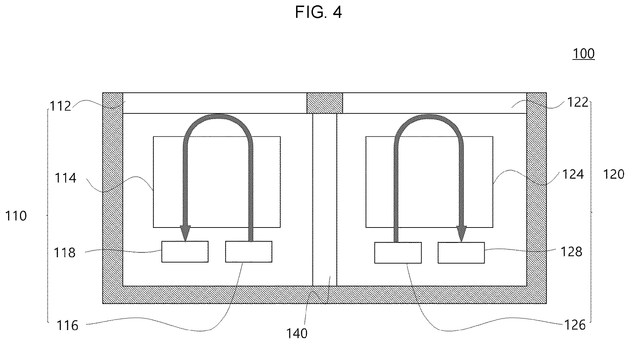

FIGS. 3 and 4 respectively show the device 1000 for detecting window contamination in the standard mode and the detection mode according to an embodiment of the present invention.

In an example, the controller 130 may include a memory and a processor. The memory may store at least one instruction. The processor may execute at least one instruction stored in the memory. In an example, the controller 130 may further include a wireless or wired communication infrastructure enabling interaction between various components of the device 1000 for detecting window contamination.

As shown in FIG. 3, in the standard mode, the controller 130 may control the processor to emit the laser light from the transmitter light source 116 to an object 300. The laser light reflected from the object 300 may be detected by the receiver detector 128.

As shown in FIG. 4, in the detection mode, the controller 130 may control the processor to allow the laser signal transmitter 110 and the laser signal receiver 120 to respectively emit the light and detect the same in the stand mode.

For example, the light emitted from the transmitter light source 116 may be reflected through the transmitter window 112 and detected in the laser signal transmitter 110, and the light emitted from the receiver light source 126 may be reflected through the receiver window 122 and detected in the laser signal receiver 120.

In an example, in the detection mode, the light emitted from the transmitter light source 116 or the receiver light source 126 may have an intensity that is variable as needed.

In an example, the light emitted by the laser signal transmitter 110 may have an intensity that is greater in the standard mode than in the detection mode.

In an example, the detection mode may be performed only by the laser signal transmitter 110, only by the laser signal receiver 120, or by both the laser signal transmitter 110 and the laser signal receiver 120.

Hereinafter, the description describes that the detection mode is performed by both the laser signal transmitter 110 and the laser signal receiver 120.

In the detection mode, the processor may allow each detector 118 or 128 to detect the light reflected from each light source 116 or 126 to each window 112 or 122 through each optical system 114 or 124. Hereinafter, an internal reflection signal may refer to a signal of the light reflected from each light source 116 or 126 through each window 112 and 122 through each optical system 114 or 124 to be incident on each detector 118 or 128.

In an example, the processor may compare a measured amplitude of each internal reflection signal with a reference amplitude of the internal reflection signal when no contamination occurs on the transmitter window 112 or the receiver window 122, and determine that the contamination occurs on the transmitter window 112 or the receiver window 122 when the measured amplitude of the internal reflection signal is greater than the reference amplitude.

The present invention may provide the method for detecting window contamination of a LiDAR sensor 100. The method for detecting window contamination according to the present invention may include the standard mode and the detection mode, as described above.

The processor may interpret the signal reflected from the object and detected by the receiver detector 128 in the standard mode, and interpret at least one of the internal reflection signal of the laser signal transmitter 110 that is detected by the transmitter detector 118 and the internal reflection signal of the laser signal receiver 120 that is detected by the receiver detector 128, in the detection mode.

In an example, the standard mode may be executed based on a predetermined time interval. Alternatively, the standard mode may be executed based on a start signal. For example, the LiDAR sensor 100 may usually maintain the standard mode, and execute the detection mode based on the predetermined time interval or the start signal.

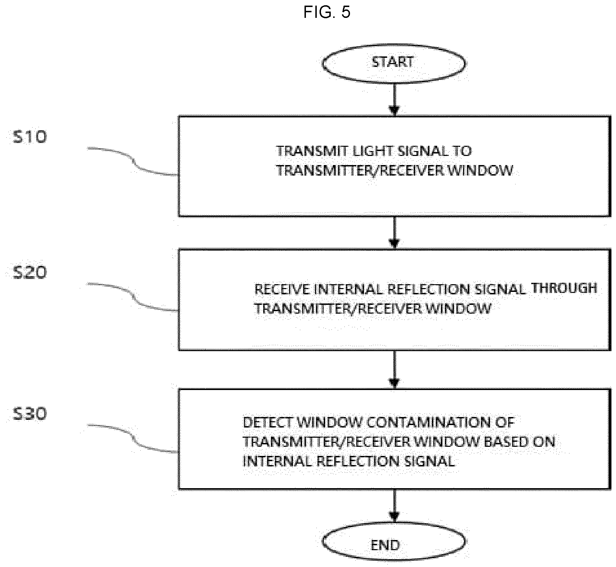

FIG. 5 shows a flowchart of the method for detecting window contamination of a light detection and ranging (LiDAR) sensor 100 in the detection mode according to an embodiment of the present invention.

Referring to FIG. 5, in the detection mode, the method may include: A) a process S10 of transmitting a laser signal having the same amplitude and wavelength to at least one contamination detection region predetermined on the transmitter window 112 or the receiver window 122; B) a process S20 of receiving the internal reflection signal reflected from the contamination detection region of the transmitter window 112 or the receiver window 122 by each detector 118 or 128; and C) a process S30 of determining whether the contamination occurs on the transmitter window 112 or the receiver window 122 based on the internal reflection signal.

A) in the process S10, the device 1000 may transmit the light having the same amplitude and wavelength to at least one contamination detection region predetermined on the transmitter window 112 and the receiver window 122.

At least one predetermined contamination detection region (or pollution detection region) may be a region that requires determination of whether the contamination occurs on the transmitter window 112 and the receiver window 122, and may be a region predetermined as a detection target of the device 1000 for detecting window contamination.

Here, the contamination detection region may include a region corresponding to all or part of the transmitter window 112 or all or part of the receiver window 122, based on the detection range of the LiDAR sensor 100. In an example, the contamination detection regions may be set to one or more different regions.

B) in the process S20, the laser signal transmitter 110 and the laser signal receiver 120 may transmit the light signal having the same amplitude and wavelength to one or more contamination detection regions. Among the light signals having the same amplitude and wavelength, the light signal transmitted to the region where the contamination occurs may be the internal reflection signal having a different form from the light signal transmitted to the region where no contamination occurs. Therefore, the device 1000 may easily detect the contamination by immediately comparing the internal reflection signals with each other.

In an example, C) the process S30 of determining whether the window contamination occurs may include: a process of comparing the measured amplitude of the internal reflection signal with the reference amplitude of the internal reflection signal when no contamination occurs on the transmitter window 112 or the receiver window 122; and a process of determining that the contamination occurs in the contamination detection region when the measured amplitude of the internal reflection signal is greater than the reference amplitude.

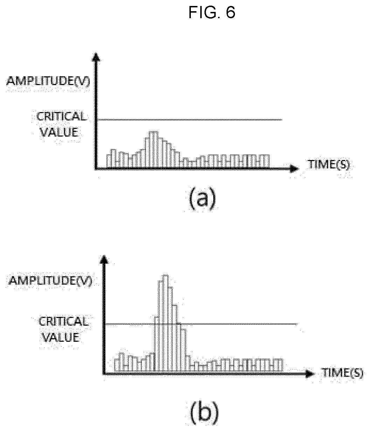

FIG. 6, including parts (a) and (b), show a process of determining the contamination according to an embodiment of the present invention. The internal reflection signal received by each detector 118 or 128 may have a different intensity based on whether the contamination occurs in the corresponding contamination detection region. Each detector 118 or 128 may determine whether the window contamination occurs based on the intensity of the internal reflection signal. Here, the intensity of the internal reflection signal may be determined based on a relative size of an amplitude value of the signal.

Referring to part (a) of FIG., 6 the amplitude value of the internal reflection signal that is shown by each detector 118 or 128 may not exceed a critical point when no contamination occurs on the transmitter window 112 or the receiver window 122. On the other hand, referring to part (b) of FIG. 6, the amplitude value of the internal reflection signal that is shown by each detector 118 or 128 may exceed the critical point due to the noise added by the contaminated window. The controller 130 may determine whether the contamination occurs based on the amplitude value of the internal reflection signal that is shown by each detector 118 or 128.

The present invention may detect the window contamination of the LiDAR sensor 100 even when the transmitter and the receiver are completely optically shielded to remove the internal noise.

In addition, the present invention may also detect the window contamination of the bistatic LiDAR sensor 100 configured to separate the transmission path and reception path of the laser light.

As set forth above, the present invention may detect the window contamination of the LiDAR sensor 100 when the transmitter and the receiver are completely optically shielded to remove the internal noise.

In addition, the present invention may also detect the window contamination of the bistatic LiDAR sensor 100 configured to separate the transmission path and reception path of the laser light.

Advantageous effects of the present invention are not limited to the above-mentioned effects, and effects that are not mentioned are clearly understood by those skilled in the art to which the present invention pertains from the specification and the accompanying drawings.

## Claims

1. A device for detecting window contamination of a light detection and ranging, LiDAR, sensor, the device comprising:
a laser signal transmitter including:
a transmitter light source,
a transmitter optical system, and
a transmitter window for transmitting a laser signal from the transmitter light source to the transmitter window through the transmitter optical system;
a laser signal receiver including:
a receiver window disposed on a same plane as the transmitter window,
a receiver optical system, and
a receiver detector for receiving a reflection signal of the laser signal that is reflected from an object disposed in front of the LiDAR sensor, through the receiver window and the receiver optical system; and
a shield for shielding a space between the laser signal transmitter and the laser signal receiver.

2. The device of claim 1, wherein the laser signal transmitter further includes a transmitter detector for detecting an internal reflection signal of the laser signal that is reflected through the transmitter window.

3. The device of claim 2, wherein the transmitter detector is parallel to the transmitter light source.

4. The device of claim 1, 2, or 3, wherein the laser signal receiver further includes a receiver light source for emitting light to the receiver window.

5. The device of claim 4, wherein the receiver light source is parallel to the receiver detector.

6. The device of claim 4, or 5, wherein the receiver light source comprises a type different from that of the transmitter light source.

7. A method for detecting window contamination of a light detection and ranging, LiDAR, sensor by using the device for detecting window contamination of a LiDAR sensor, the method comprising:
transmitting, by a laser signal transmitter, a laser signal from a transmitter light source to a transmitter window through a transmitter optical system;
receiving, by a laser signal receiver, a reflection signal of the laser signal that is reflected from an object, disposed in front of the LiDAR sensor, by a detector through a receiver window and a receiver optical system;
shielding, by a shield, a space between the laser signal transmitter and the laser signal receiver;
detecting, by a transmitter detector of the laser signal transmitter, an internal reflection signal of the laser signal that is reflected through the transmitter window;
emitting light, by a receiver light source of the laser signal receiver, to the receiver window;
interpreting the reflection signal detected by the receiver detector in a standard mode, and
interpreting at least one of an internal reflection signal of the laser signal transmitter that is detected by the transmitter detector and an internal reflection signal of the laser signal receiver that is detected by the receiver detector, in a detection mode.

8. The method of claim 7, wherein, in the detection mode, the method further comprises:
transmitting the laser signal having a same amplitude and wavelength to at least one contamination detection region predetermined on the transmitter window;
receiving the internal reflection signal of the laser signal transmitter that is reflected from the contamination detection region by the transmitter detector; and
determining occurrence of the window contamination based on the internal reflection signal of the laser signal transmitter.

9. The method of claim 7, or 8, wherein, in the detection mode, the method further comprises:
transmitting light having the same amplitude and wavelength to at least one contamination detection region predetermined on the receiver window;
receiving the internal reflection signal of the laser signal receiver that is reflected from the contamination detection region by the receiver detector; and
determining an occurrence of the window contamination based on the internal reflection signal of the laser signal receiver.

10. The method of any one of claims 8 to 9, wherein the determining of whether the window contamination occurs includes:
comparing a measured amplitude of the reflection signal with a reference amplitude of the reflection signal in response to the determination that there is no window contamination; and
determining an existence of contamination in the contamination detection region when the measured amplitude of the reflection signal is greater than the reference amplitude.

11. The device of any one of claims 1 to 6 or the method of any one of claims 7 to 10, wherein the receiver light source comprises a light emitting diode, LED.

12. The device of any one of claims 1 to 6 or the method of any one of claims 7 to 11, wherein the LiDAR sensor comprises a bistatic LiDAR sensor.

13. A device for detecting window contamination of a light detection and ranging, LiDAR, sensor, the device comprising:
a laser signal transmitter including:
a first light source,
a first optical system, and
a first window;
a laser signal receiver including:
a second window disposed on a same plane as the transmitter window,
a second optical system, and
a first detector;
a shield for shielding a space between the laser signal transmitter and the laser signal receiver; and
a controller configured to:
control the laser signal transmitter to transmit a laser signal from the first light source to the first window through the first optical system; and
control the laser signal receiver to receive a reflection signal of the laser signal that is reflected from an object disposed in front of the LiDAR sensor, by the first detector through the second window and the second optical system.

14. The device of claim 13,
wherein the laser signal transmitter further includes a second detector,
wherein the laser signal receiver further includes a second light source, and
wherein the controller is further configured to:
control the second detector to detect an internal reflection signal of the laser signal that is reflected through the first window; and
control the second light source to emit light to the second window.

15. The device of claim 14, wherein the controller is further configured to determine an occurrence of window contamination based on:
the reflection signal detected by the first detector, in a standard mode; and
at least one of an internal reflection signal of the laser signal transmitter that is detected by the second detector and an internal reflection signal of the laser signal receiver that is detected by the first detector, in a detection mode.

16. The device of claim 15, wherein, in the detection mode, the controller is further configured to:
control the laser signal transmitter to transmit the laser signal having a same amplitude and wavelength to at least one contamination detection region predetermined on the first window;
control the second detector to receive the internal reflection signal of the laser signal transmitter that is reflected from the contamination detection region; and
determine the occurrence of the window contamination based on the internal reflection signal of the laser signal transmitter.

17. The method of any one of claims 7 to 12 or the device of claim 15, or 16, wherein the laser signal comprises an intensity that is greater in the standard mode than in the detection mode.
